# FASCICULE DE BREVET EUROPEEN

(11) **EP 4 392 598 B1**
(45) Date de publication et mention de la délivrance du brevet: **25.06.2025**
(21) Numéro de dépôt: 22789266.8
(22) Date de dépôt: 19.09.2022
(51) Int. Cl.: C25B 1/04, C25B 15/021, H01M 8/04007, H01M 8/04223, H01M 8/12, C25B 1/042, C25B 9/67, C25B 9/75, C25B 9/77

(54) **ENSEMBLE D'UN EMPILEMENT DE CELLULES À OXYDES SOLIDES DE TYPE SOEC/SOFC ET D'UN SYSTÈME DE SERRAGE AVEC PLAQUE CHAUFFANTE**
VORRICHTUNG EINES FESTOXIDSTAPEL VOM TYP SOEC/SOFC UND SPANNVORRICHTUNG MIT HEIZPLATTE
ASSEMBLY OF A SOLID OXIDE CELL STACK OF TYPE SOEC/SOFC AND TIGHTENING SYSTEM WITH HEATING PLATE

(30) Priorité: 21.09.2021 FR 2109939
(43) Date de publication de la demande: 03.07.2024
(73) Titulaire: Commissariat à l'Energie Atomique et aux Energies Alternatives, 75015 Paris (FR)
(72) Inventeur: PLANQUE, Michel, 38054 GRENOBLE CEDEX 09 (FR); ROUX, Guilhem, 38054 GRENOBLE CEDEX 09 (FR)
(74) Mandataire: Brevalex
(86) Numéro de dépôt international: PCT/FR2022/051755
(87) Numéro de publication internationale: WO 2023/047045

(56) Documents cités:
- EP-A1- 3 835 455
- WO-A1-2016/085360
- WO-A1-2019/081866
- WO-A1-2020/084258
- FR-A1- 3 075 481
- US-B1- 6 649 293

## Description

### DOMAINE TECHNIQUE

La présente invention se rapporte au domaine général de l'électrolyse à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de la vapeur d'eau et du dioxyde de carbone (CO₂) à haute température.

Plus précisément, l'invention se rapporte au domaine des électrolyseurs à oxydes solides à haute température, désignés habituellement par l'acronyme SOEC (pour « Solide Oxide Electrolysis Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements à oxydes solides de type SOEC/SOFC fonctionnant à haute température.

Plus précisément, l'invention concerne un ensemble comprenant un empilement de cellules à oxydes solides de type SOEC/SOFC et un système de serrage comprenant au moins une plaque chauffante démontable et interchangeable, ainsi qu'un procédé de fabrication associé.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) ou d'autres combustibles tels que le méthane (CH₄), le gaz naturel, le biogaz, et en dioxygène (O₂), typiquement en air. Par souci de simplicité, la description suivante privilégie le fonctionnement d'un électrolyseur à oxydes solides à haute température de type SOEC réalisant l'électrolyse de la vapeur d'eau. Toutefois, ce fonctionnement est applicable à l'électrolyse du dioxyde de carbone (CO₂), voire encore de la co-électrolyse de la vapeur d'eau à haute température avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en œuvre l'électrolyse de la vapeur d'eau à haute température (EVHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, l'apport en réactifs et l'évacuation des produits pour chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT ; air et combustible dont l'hydrogène injecté et eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le carburant, tandis que le compartiment cathodique comporte le combustible.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

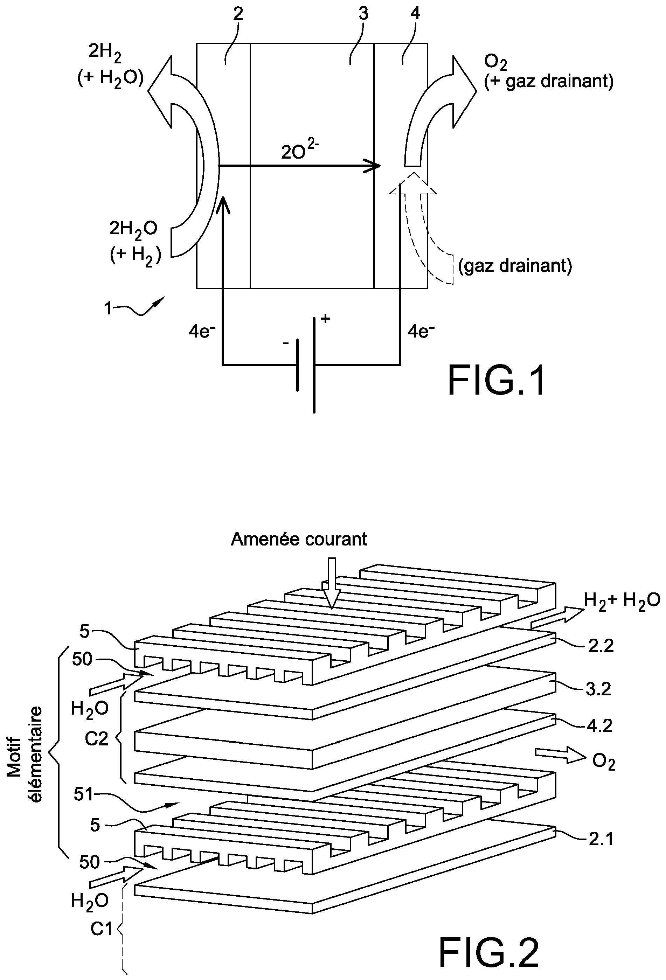

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂ + 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée côté anode pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique et fluidique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et les alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type cellules à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

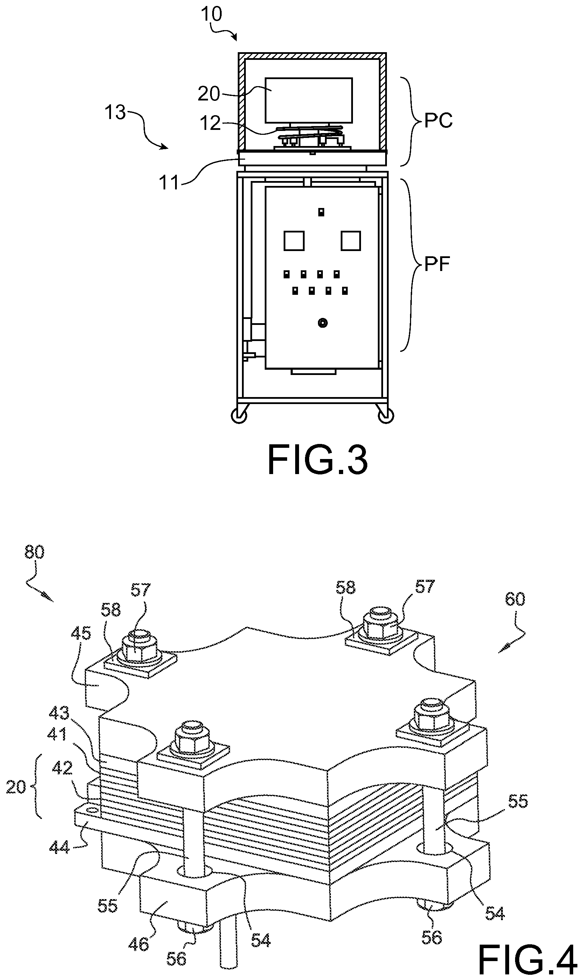

Classiquement, les gaz entrants et sortants dans un empilement d'électrolyse à haute température (SOEC) ou de pile à combustible (SOFC) fonctionnant à haute température peuvent être gérés par le biais de dispositifs tel que celui illustré en référence à la figure 3. Le dispositif 13 comporte ainsi des parties froides PF et des parties chaudes PC, ces dernières comprenant la sole de four 11, la cloche du four 10, un tube en boucle 12 pour gérer les entrées et sorties de gaz et l'empilement 20, encore appelé « stack », d'électrolyse à haute température (SOEC) ou de pile à combustible (SOFC).

On connaît de la demande de brevet français FR 3 045 215 A1 un principe de système de serrage autonome d'un empilement de type SOEC/SOFC pour le rendre autonome et lui conférer un caractère de type « Plug & Play » (PnP), soit de type « branche et utilise ». Un tel concept d'empilement, ayant des éléments chauffants intégrés démontables, par exemple de type résistance électrique, permet à la fois l'application de l'effort à la fabrication de l'empilement, le maintien de ce même effort, y compris en fonctionnement à haute température, ainsi que l'apport de chaleur nécessaire à son fonctionnement au plus près de l'empilement. Ce système PnP à unités de chauffe intégrées permet l'installation rapide du stack au sein d'un système dit « Hot-Box », constitué alors seulement d'une enceinte isolée et compacte, et son fonctionnement sans avoir à gérer son serrage en fonctionnement à haute température, malgré les dilatations différentielles des différents composants, et l'amélioration de l'efficacité thermique du système et par conséquent de ses performances. Cela permet également de gagner en compacité dans la zone de chauffe étant donné qu'un four résistif n'est plus nécessaire.

En référence à la figure 4, on a ainsi illustré un exemple d'ensemble 80 comprenant un empilement 20 à oxydes solides de type SOEC/SOFC et un système de serrage 60. Cet empilement 20 comporte une pluralité de cellules électrochimiques 41 formées chacune d'une cathode, d'une anode et d'un électrolyte intercalé entre la cathode et l'anode, et une pluralité d'interconnecteurs intermédiaires 42 agencés chacun entre deux cellules électrochimiques 41 adjacentes. Cet ensemble de cellules électrochimiques 41 et d'interconnecteurs intermédiaires 42 est également désigné par « stack ».

De plus, l'empilement 20 comporte une plaque terminale supérieure 43 et une plaque terminale inférieure 44, respectivement également dénommées plaque terminale de stack supérieure 43 et plaque terminale de stack inférieure 44, entre lesquelles la pluralité de cellules électrochimiques 41 et la pluralité d'interconnecteurs intermédiaires 42 sont enserrées, soit entre lesquelles se trouve le stack.

Par ailleurs, l'ensemble 80 comporte aussi un système de serrage 60 de l'empilement 20 à oxydes solides de type SOEC/SOFC, comportant une plaque de serrage supérieure 45 et une plaque de serrage inférieure 46, entre lesquelles l'empilement 20 à oxydes solides de type SOEC/SOFC est enserré. Chaque plaque de serrage 45, 46 du système de serrage 60 comporte quatre orifices de serrage 54.

De plus, le système de serrage 60 comporte en outre quatre tiges de serrage 55, ou tirants, s'étendant au travers d'un orifice de serrage 54 de la plaque de serrage supérieure 45 et au travers d'un orifice de serrage 54 correspondant de la plaque de serrage inférieure 46 pour permettre l'assemblage entre elles des plaques de serrage supérieure 45 et inférieure 46.

Le système de serrage 60 comporte de plus des moyens de serrage 56, 57, 58 au niveau de chaque orifice de serrage 54 des plaques de serrage supérieure 45 et inférieure 46 coopérant avec les tiges de serrage 55 pour permettre l'assemblage entre elles des plaques de serrage supérieure 45 et inférieure 46.

Plus précisément, les moyens de serrage comportent, au niveau de chaque orifice de serrage 54 de la plaque de serrage supérieure 45, un premier écrou de serrage 56 coopérant avec la tige de serrage 55 correspondante insérée au travers de l'orifice de serrage 54. De plus, les moyens de serrage comportent, au niveau de chaque orifice de serrage 54 de la plaque de serrage inférieure 46, un deuxième écrou de serrage 57 associé à une rondelle de serrage 58, ceux-ci coopérant avec la tige de serrage 55 correspondante insérée au travers de l'orifice de serrage 54. La rondelle de serrage 58 est située entre le deuxième écrou de serrage 57 et la plaque de serrage inférieure 46.

Par ailleurs, on connaît également de la demande de brevet français FR 3 087 952 A1 un principe d'intégration d'éléments chauffants aux plaques supérieure et inférieure d'un système de serrage autonome de stack de type PnP, notamment tel que décrit ci-dessus. Ainsi, des éléments chauffants de type cordons chauffants sont intégrés aux deux plaques de serrage supérieure et inférieure épaisses, de l'ordre de 30 mm, en acier austénitique réfractaire, de type AISI 310, par usinage et brasage.

Les éléments chauffants intégrés aux composants métalliques denses au contact direct de l'empilement permettent ainsi d'améliorer fortement les pertes par transfert thermique, qui se fait alors par conduction sans perturbation et de façon uniforme sur les zones de contact. Cela permet une excellente homogénéité thermique entre les plaques supérieure et inférieure, et par extension une bonne homogénéité globale de l'empilement, et une réactivité accrue des éléments chauffants à la consigne de température fixée pour l'électrolyseur. On obtient ainsi une meilleure gestion thermique de l'ensemble du système. Le chauffage étant intégré, l'isolation peut être modulée aux formes du stack limitant d'autant plus le rayonnement vers l'extérieur. Une telle efficacité de transfert thermique des éléments chauffants permet alors de baisser la puissance à fournir au système d'au minimum 100 W pour fonctionner à des températures de l'ordre de 600 à 1000°C. La température mesurée dans l'enceinte isolée suit une rampe en montée quasiment identique à celle des plaques, ce qui est également un très bon signe pour le contrôle thermique de la « Hot-Box ».

Cependant, un des problèmes de cette technologie réside dans le fait que si un élément chauffant vient à dysfonctionner, il n'existe aucune marge de manœuvre. La gestion thermique du stack est alors perdue, sans possibilité de récupération. En outre, le coût de réalisation de ces éléments chauffants, notamment sous forme de résistances brasées sur les plaques de serrage, est très important et donc contraignant.

Il existe ainsi encore un besoin pour améliorer l'intégration d'unités de chauffe dans un empilement d'électrolyse à haute température (SOEC) ou de pile à combustible (SOFC) tout en permettant un fonctionnement à haute température, notamment entre 600 et 1000°C.

### EXPOSÉ DE L'INVENTION

L'invention a pour but de remédier au moins partiellement aux besoins mentionnés précédemment et aux inconvénients relatifs aux réalisations de l'art antérieur.

L'invention a ainsi pour objet, selon l'un de ses aspects, un ensemble, comportant :
- un empilement de cellules à oxydes solides de type SOEC/SOFC fonctionnant à haute température, comportant :
   - une pluralité de cellules électrochimiques formées chacune d'une cathode, d'une anode et d'un électrolyte intercalé entre la cathode et l'anode, et une pluralité d'interconnecteurs intermédiaires agencés chacun entre deux cellules électrochimiques adjacentes,
   - un système de serrage de l'empilement de cellules à oxydes solides de type SOEC/SOFC, comportant une plaque de serrage supérieure et une plaque de serrage inférieure, entre lesquelles l'empilement de cellules à oxydes solides de type SOEC/SOFC est enserré, chaque plaque de serrage comportant au moins deux orifices de serrage, le système de serrage comportant en outre :
      - au moins deux tiges de serrage destinées à s'étendre chacune au travers d'un orifice de serrage de la plaque de serrage supérieure et au travers d'un orifice de serrage correspondant de la plaque de serrage inférieure pour permettre l'assemblage entre elles des plaques de serrage supérieure et inférieure,
      - des moyens de serrage au niveau de chaque orifice de serrage des plaques de serrage supérieure et inférieure destinés à coopérer avec lesdites au moins deux tiges de serrage pour permettre l'assemblage entre elles des plaques de serrage supérieure et inférieure,

caractérisé en ce qu'au moins l'une des plaques de serrage supérieure et inférieure comporte un logement, formé dans l'épaisseur de ladite au moins l'une des plaques de serrage supérieure et inférieure, comprenant des première et deuxième extrémités opposées dont l'une au moins débouche sur la face latérale de ladite au moins l'une des plaques de serrage supérieure et inférieure, ledit logement étant situé à l'intérieur de ladite au moins l'une des plaques de serrage supérieure et inférieure, à distance de ses faces principales supérieure et inférieure sensiblement parallèles entre elles,
et en ce que l'ensemble comporte au moins une plaque chauffante, démontable et interchangeable, insérée dans ledit logement.

Grâce à l'invention, il peut être possible de conserver les intérêts associés à l'intégration d'éléments chauffants dans les plaques de serrage épaisses, ce qui permet d'améliorer l'efficacité thermique de l'empilement de type SOEC/SOFC tout en minimisant les pertes de chaleur et en conservant le même dimensionnement des éléments du système de serrage autonome décrit précédemment. De plus, le principe de l'invention permet de rendre le ou les éléments chauffants démontables et interchangeables, notamment en cas de dysfonctionnement de ceux-ci.

L'ensemble selon l'invention peut en outre comporter l'une ou plusieurs des caractéristiques suivantes prises isolément ou suivant toutes combinaisons techniques possibles.

Ledit logement et ladite au moins une plaque chauffante peuvent présenter une forme sensiblement parallélépipédique, notamment une forme de pavé ou une forme cubique.

Par ailleurs, ledit logement peut être formé, dans l'épaisseur de ladite au moins l'une des plaques de serrage supérieure et inférieure, de façon centrale, à égale distance des faces principales supérieure et inférieure, et à égale distance des orifices de serrage, entre les orifices de serrage.

De plus, l'épaisseur dudit logement peut être comprise entre 5 mm et 10 mm, notamment de l'ordre de 8 mm. La largeur dudit logement peut quant à elle être comprise entre 20 mm et 86 mm, notamment de l'ordre de 86 mm.

En outre, ladite au moins une plaque chauffante peut comporter une résistance chauffante dont la puissance maximale est d'au moins 1200 W.

Ladite au moins une plaque chauffante peut être réalisée en céramique ou en alliage métallique, notamment en acier inoxydable ou en alliage à base de nickel, étant notamment traité par un revêtement d'aluminisation.

De plus, un jeu peut être présent entre la surface externe de ladite au moins une plaque chauffante et la surface interne dudit logement, dont la dimension peut être comprise entre 0,2 et 0,5 mm.

Par ailleurs, que ladite au moins l'une des plaques de serrage supérieure et inférieure peut comporter au moins une rainure interne formée dans l'épaisseur de ladite au moins l'une des plaques de serrage supérieure et inférieure, et s'étendant sensiblement parallèlement aux faces supérieure et inférieure de celle-ci, et dont au moins une extrémité débouche sur la face latérale de ladite au moins l'une des plaques de serrage supérieure et inférieure. L'ensemble peut alors comporter au moins un dispositif de thermocouple inséré dans ladite au moins une rainure interne.

En particulier, ladite au moins une rainure interne peut comporter une première rainure interne de sécurité et une deuxième rainure interne de régulation. Ledit au moins un dispositif de thermocouple peut comporter un premier dispositif de thermocouple de sécurité inséré dans la première rainure interne et un deuxième dispositif de thermocouple de régulation inséré dans la deuxième rainure interne.

Par ailleurs, l'ensemble peut comporter une plaque terminale supérieure et une plaque terminale inférieure, entre lesquelles la pluralité de cellules électrochimiques et la pluralité d'interconnecteurs intermédiaires sont enserrées.

De plus, ladite au moins l'une des plaques de serrage supérieure et inférieure peut avantageusement être fabriquée par une technique de fabrication additive, étant notamment réalisée en acier austénitique réfractaire, en particulier de type AISI 310.

En outre, ladite au moins l'une des plaques de serrage supérieure et inférieure peut présenter une épaisseur comprise entre 20 et 30 mm, notamment de l'ordre de 25 mm.

De plus, l'invention a encore pour objet, selon un autre de ses aspects, un système, caractérisé en ce qu'il comporte :
- un ensemble tel que défini précédemment,
- un dispositif, auquel est raccordé au moins un tube d'entrée et/ou de sortie de gaz, et sur lequel l'empilement de cellules à oxydes solides de type SOEC/SOFC fonctionnant à haute température est couplé pour l'amenée et la sortie des gaz.

Par ailleurs, l'invention a aussi pour objet, selon un autre de ses aspects, un procédé de fabrication d'un ensemble tel que défini précédemment, caractérisé en ce qu'il comporte l'étape de réalisation dudit logement dans ladite au moins l'une des plaques de serrage supérieure et inférieure.

L'étape de réalisation dudit logement peut par exemple comporter la réalisation par électroérosion par enfonçage et/ou par fabrication additive.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
[Fig. 1] est une vue schématique montrant le principe de fonctionnement d'un électrolyseur à oxydes solides à haute température (SOEC),
[Fig. 2] est une vue schématique éclatée d'une partie d'un électrolyseur à oxydes solides à haute température (SOEC) comprenant des interconnecteurs selon l'art antérieur,
[Fig. 3] illustre le principe de l'architecture d'un dispositif sur lequel un empilement d'électrolyse à haute température (SOEC) ou de pile à combustible (SOFC) fonctionnant à haute température est placé,
[Fig. 4] représente, en perspective et par observation du dessus, un exemple d'un ensemble comprenant un empilement de cellules à oxydes solides de type SOEC/SOFC et un système de serrage de l'empilement,
[Fig. 5] représente, en perspective et par observation du dessus, un exemple d'ensemble conforme à l'invention comprenant un empilement de cellules à oxydes solides de type SOEC/SOFC, un système de serrage de l'empilement, et deux plaques chauffantes insérées dans des logements correspondants formés dans les plaques de serrage,
[Fig. 6] représente, selon une vue en perspective et par observation du dessus et en transparence, une plaque de serrage supérieure d'un ensemble conforme à l'invention, représentée de manière isolée,
[Fig. 7] est une vue partielle latérale selon VII de [Fig. 6],
[Fig. 8] représente, par observation du dessous, une plaque de serrage inférieure d'un ensemble conforme à l'invention, tel que celui de [Fig. 5], et
[Fig. 9] est une vue partielle latérale en perspective de l'ensemble conforme à l'invention de [Fig. 5].

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 à 4 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur » et « inférieur » sont à comprendre ici selon le sens d'orientation normal d'un empilement de type SOEC/SOFC lorsque dans sa configuration d'utilisation.

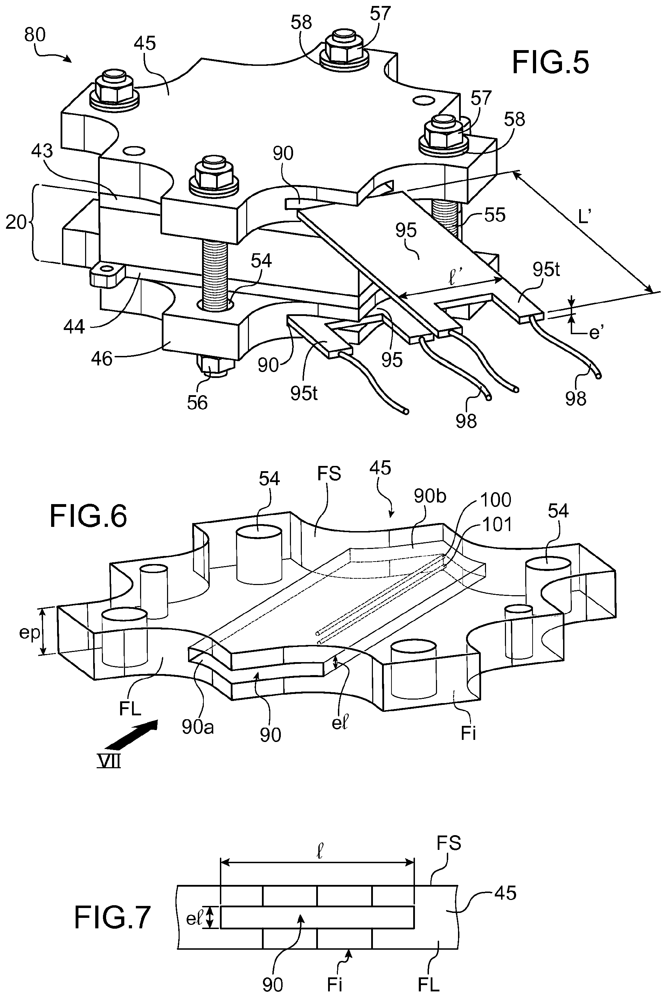

Les figures 5 à 9 sont relatives à un exemple de réalisation d'un ensemble 80 conforme à l'invention. En particulier, la figure 5 représente un exemple d'ensemble 80 conforme à l'invention semblable à celui décrit précédemment en référence à la figure 4. Aussi, les éléments communs aux figures 4 et 5 ne seront pas décrits de nouveau.

Conformément à l'invention, chaque plaque de serrage supérieure 45 et inférieure 46 comporte un logement 90. Les caractéristiques de tels logements 90 sont mieux visibles en référence aux figures 6 à 8.

Chaque logement 90 est formé dans l'épaisseur eₚ de chaque plaque de serrage supérieure 45 et inférieure 46. Il comporte une première extrémité 90a et une deuxième extrémité 90b, opposées l'une à l'autre, qui débouchent toutes les deux sur la face latérale FL de chaque plaque de serrage 45, 46.

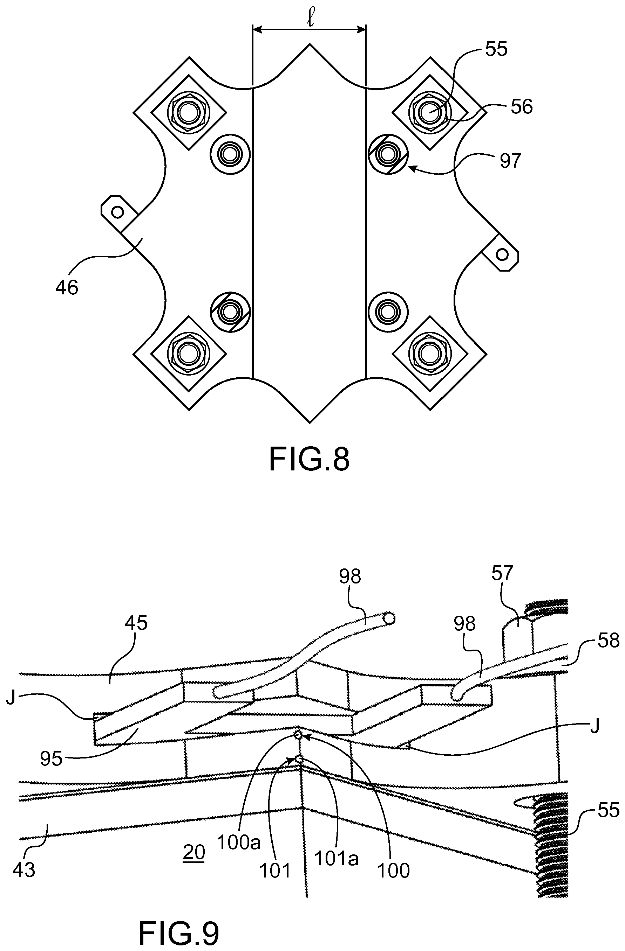

Le logement 90 est formé à l'intérieur de la plaque de serrage 45, 46 correspondante, la traversant selon un axe longitudinal en passant par le milieu de la plaque. Il est donc centré à l'intérieur de la plaque de serrage 45, 46. En particulier, comme visible sur la figure 6 relative à la plaque de serrage supérieure 45, le logement 90 est formé à égale distance des orifices de serrage 54, entre ceux-ci. De même, comme visible sur la figure 8 relative à la plaque de serrage inférieure 46, le logement 90 est formé à égale distance des trous de passage 97 d'entrée et/ou de sortie des gaz. Chaque logement 90 est ainsi destiné à recevoir une plaque chauffante 95, comme visible sur la figure 5. Chaque plaque chauffante 95 est alimentée par le biais de cordons d'alimentation 98 visibles sur la figure 5. Le positionnement des plaques chauffantes 95, munies de telles arrivées électriques sous forme de câbles 98 peut se faire de sorte que ceux-ci soient situés à l'extérieur du côté générant le moins de perturbations.

De façon privilégiée, chaque logement 90 et chaque plaque chauffante 95 se présentent sous une forme sensiblement parallélépipédique, et notamment ici une forme sensible de pavé mais ce pourrait également être une forme cubique, voire une autre forme.

Avantageusement, l'invention permet donc l'utilisation de plaques chauffantes démontables et interchangeables. Aussi, en cas de détérioration d'une plaque chauffante, elle peut être aisément remplacée.

Les dimensions du logement 90 et de la plaque chauffante 95 peuvent varier selon les différents besoins et notamment selon la nature des plaques chauffantes utilisées.

De façon générale, l'épaisseur eₗ du logement 90 est comprise entre 5 mm et 10 mm, étant par exemple ici de l'ordre de 8 mm, et la largeur l du logement 90 est comprise entre 20 mm et 86 mm, étant par exemple ici de l'ordre de 86 mm.

Par ailleurs, l'épaisseur e' de la plaque chauffante 95 est comprise entre 5 mm et 10 mm, étant par exemple ici de l'ordre de 5 mm, la largeur l' de la plaque chauffante 95, notamment sa surface chauffante, est comprise entre 20 mm et 86 mm, étant par exemple ici de l'ordre de 84 mm, et la longueur L' de la plaque chauffante 95, notamment sa surface chauffante, est comprise entre 210 mm et 220 mm, étant par exemple ici de l'ordre de 260 mm.

Les logements 90, ou ouvertures, formées dans les plaques de serrage supérieure 45 et inférieure 46 peuvent être réalisées de différentes manières. En particulier, elles peuvent être obtenues par procédé d'électroérosion par enfonçage (ou encore EDM pour « Electrical Discharge Machining » en anglais) et/ou par procédé de fabrication additive, comprenant notamment l'impression 3D.

D'une part, l'électroérosion par enfonçage est un procédé d'usinage qui consiste à enlever de la matière dans une pièce en utilisant des décharges électriques. On parle aussi d'usinage par étincelage. Cette technique se caractérise par son aptitude à usiner tous les matériaux conducteurs de l'électricité, tels que métaux, alliages, carbures, graphites, etc., quelle que soit leur dureté. Ce procédé d'usinage consiste à faire passer un courant dans un diélectrique, afin de générer une « bulle » de vapeur ou de vide qui s'ionise et se résorbe en implosant, entraînant la destruction de la matière. Cette destruction, micro-implosion, provoque l'étincelle. Le courant de forte intensité ionise un canal à travers le diélectrique. Une décharge disruptive se produit alors, de l'électrode vers la pièce à usiner, détériorant celle-ci très localement, de l'ordre de quelques µm². Le diélectrique refroidit alors les particules détériorées qui tombent dans le bac de la machine sous la forme d'une boue (microparticules de matière et diélectrique).

D'autre part, la technologie de fabrication additive permet à partir d'un modèle de fichier numérique et à l'aide d'une machine utilisant un procédé comme l'extrusion ou la solidification de poudre métallique, polymère et fil polymère, de créer, étape par étape, un objet. On parle d'impression «couche par couche». L'impression 3D se résume à un dépôt de la matière en fusion, un filtrage sélectif à l'aide d'une source d'énergie (laser, résistances, faisceaux d'électrons, ou lumière ultraviolette) qui permet de rassembler l'objet et enfin la solidification du matériau lors de la période de refroidissement, sauf dans le cas de la stéréo lithographie où intervient un phénomène chimique de polymérisation sur des résines photoréticulables. La machine imprime séquentiellement chaque couche, l'une au-dessus de l'autre, construisant ainsi un objet réel à l'intérieur de la chambre de construction de la machine. Une fois que l'imprimante 3D termine la dernière couche, un cycle de séchage court commence. Puis l'objet réel peut être retiré, et potentiellement subir un traitement de finition si nécessaire, tel que ponçage, cuisson pour la dureté, etc. Fabriquer ne consiste donc plus à soustraire de la matière, comme le font les techniques traditionnelles avec le laminage ou l'usinage mais au contraire en ajouter couche par couche afin d'obtenir l'objet final imaginé dans la matière désirée.

Par ailleurs, afin de pouvoir fonctionner dans les gammes de température attendues pour un empilement de cellules à oxydes solides de type SOFC/COEC, les plaques chauffantes 95 comportent des résistances chauffantes dont la puissance maximale est d'au moins 1200 W. Ainsi, elles peuvent atteindre une puissance d'approximativement 1200 W ± 10% sous 230 V, ce qui correspond à une température maximale de la zone chaude de 1000°C avec une bonne isolation et une régulation adaptée, permettant ainsi de couvrir la puissance dissipée par l'enceinte isolée. Les plaques chauffantes 95 peuvent être obtenues dans le commerce, notamment par le biais d'entreprises spécialisées dans les hautes températures.

Les plaques chauffantes peuvent préférentiellement être réalisées en céramique. Différentes dimensions et tailles peuvent être produites. De telles plaques chauffantes peuvent présenter une zone chaude avec une plage de fonctionnement jusqu'à 1000°C et une zone froide dans la zone de contact jusqu'à 600°C, pouvant être protégée par un gainage en laine céramique. Toutefois, de grandes plaques chauffantes plates peuvent être fabriquées sans zone froide. Les propriétés spéciales et la faible masse du matériau céramique peuvent permettre des vitesses de chauffage rapides, une répartition uniforme de la température et une précision de contrôle. L'émissivité élevée et le large spectre d'émission du rayonnement thermique peuvent faire du matériau céramique, obtenu à partir de nitrure de silicium, un élément de chauffage radiant idéal. Une puissance de 15 W/cm² à 1000°C peut être atteinte.

Les plaques chauffantes peuvent encore être réalisées en alliage métallique. Par exemple, elles peuvent être réalisées en acier inoxydable, par exemple en inox 316L, ou en alliage à base de Nickel, notamment en Inconel^{®}, par exemple en Inconel^{®} 600. Dans ce cas, elles sont avantageusement traitées avec un revêtement d'aluminisation sur leurs surfaces afin de ne pas se souder avec les surfaces avec lesquelles elles pourraient être en contact.

De plus, les plaques chauffantes peuvent être constituées de câbles chauffants, notamment composés d'une âme chauffante à isolant minéral, par exemple de type oxyde de magnésium (MgO) à 96-99%, sous une gaine en Inconel^{®} 600 et de terminaisons froides intégrées, illustrées par la référence 95t sur la figure 5. L'âme chauffante peut présenter un diamètre compris entre 1 et 2 mm à ± 0,05 mm sur une longueur déterminée.

Par ailleurs, comme visible sur la figure 9, il faut noter qu'un jeu J est présent entre la surface externe de la plaque chauffante 95 et la surface interne du logement 90. Ce jeu J peut présenter notamment une dimension comprise entre 0,2 et 0,5 mm.

Lors de l'introduction de la plaque chauffante 95 dans son logement 90, elle peut être enduite de graisse thermique, ce qui va avoir pour effet de combler le jeu J et de réaliser un bon transfert de chaleur.

Chaque plaque de serrage 45, 46 est par exemple ici en matériau réfractaire de type inox 310s. Son coefficient de dilatation thermique à 850°C est par exemple de 18,2 (en 10⁻⁶.K⁻¹), ce qui donne un déplacement de 0,012 mm pour une largeur l de 86 mm du logement 90. Il est à noter que la dilatation du nitrure de silicium (céramique) est négligeable pour une largeur de 86 mm.

Le Tableau 1 ci-dessous présente des données d'intérêt pour des matériaux céramique pouvant être utilisés pour la fabrication des plaques chauffantes 95, et notamment les coefficients de dilatation thermique.

**Tableau 1**

| Céramique | Coefficient dilatation thermique linéaire 25-1000°C (10⁻⁶.K⁻¹) | Conductivité thermique (W/m.K) | Température maximale d'utilisation (°C) sous air | Résistance aux chocs thermiques |
|---|---|---|---|---|
| Alumine (94%-99,8%) | 7,5 à 9,5 | 18 à 30 | 1500 à 1700 | + |
| Composite alumine-zircone | 8 | 25 | 1500 | ++ |
| Zircone MgO & Y-TZP | 10 | 2 à 2,5 | 1000 à 2000 | ++ |
| Nitrure d'aluminium | 5,5 | 140 à 180 | 800 | ++ |
| Carbure de silicium fritté | 4 à 5 | 80 à 125 | 1400 à 1900 | +++ |
| Nitrure de silicium fritté | 3 à 4 | 20 à 25 | 1200 à 1500 | +++ |
| Quartz | 0,5 | 1,5 | 950 à 1150 | - |
| Vitrocéramique | 13 | 1,5 | 800 | - |

En outre, afin de pouvoir contrôler chaque plaque chauffante 95, chaque plaque de serrage 45, 46 comporte des rainures internes 100, 101, par exemple réalisées sous forme de perçages, afin d'insérer deux dispositifs de thermocouple par plaque 45, 46.

Précisément, comme visible sur la figure 9, une première rainure interne 100 de sécurité et une deuxième rainure interne 101 de régulation sont formées dans la plaque de serrage supérieure 45, permettant respectivement l'insertion d'un premier dispositif de thermocouple de sécurité et d'un deuxième dispositif de thermocouple.

Le premier dispositif de thermocouple de sécurité de la plaque chauffante 95 est placé au plus près de la zone à contrôler, à savoir au plus proche de la résistance chauffante afin d'éviter sa surchauffe et sa détérioration. Le deuxième dispositif de thermocouple de régulation de la plaque chauffante 95 est situé dans la zone d'intérêt permettant d'obtenir une information sur le transfert de chaleur à l'empilement 20, ou stack.

Il est important de noter que la dilatation doit également être prise en compte, mais comme les efforts de serrage se font au niveau des alésages des plaques de serrage, il faut s'assurer que les plaques ne se courbent pas car les plaques chauffantes, préférentiellement en céramique, se briseraient.

Afin de pouvoir réaliser un calcul aux éléments finis, un logement 90 de 86 mm x 8 mm dans le milieu de la plaque de serrage a été choisi. Il s'agit alors de vérifier que sous un effort de serrage de 500 N par tirant, la flèche de la plaque de serrage permet d'insérer ou de retirer la plaque chauffante 95 lorsque le stack 20 est sous serrage. Le calcul a été effectué à 800°C avec comme matériau de la plaque de serrage 45, 46 de l'acier 310S.

Il a alors été observé qu'on obtient une flèche de l'ordre du micron, ce qui ne pose aucun problème particulier pour permettre le montage et le démontage de la plaque chauffante 95.

Bien entendu, l'invention n'est pas limitée aux exemples de réalisation qui viennent d'être décrits. Diverses modifications peuvent y être apportées par l'homme du métier.

## Revendications

1. Ensemble (80), comportant :
- un empilement (20) de cellules à oxydes solides de type SOEC/SOFC fonctionnant à haute température, comportant :
- une pluralité de cellules électrochimiques (41) formées chacune d'une cathode, d'une anode et d'un électrolyte intercalé entre la cathode et l'anode, et une pluralité d'interconnecteurs intermédiaires (42) agencés chacun entre deux cellules électrochimiques (41) adjacentes,
- un système de serrage (60) de l'empilement (20) de cellules à oxydes solides de type SOEC/SOFC, comportant une plaque de serrage supérieure (45) et une plaque de serrage inférieure (46), entre lesquelles l'empilement (20) de cellules à oxydes solides de type SOEC/SOFC est enserré, chaque plaque de serrage (45, 46) comportant au moins deux orifices de serrage (54), le système de serrage (60) comportant en outre :
- au moins deux tiges de serrage (55) destinées à s'étendre chacune au travers d'un orifice de serrage (54) de la plaque de serrage supérieure (45) et au travers d'un orifice de serrage (54) correspondant de la plaque de serrage inférieure (46) pour permettre l'assemblage entre elles des plaques de serrage supérieure (45) et inférieure (46),
- des moyens de serrage (56, 57, 58) au niveau de chaque orifice de serrage (54) des plaques de serrage supérieure (45) et inférieure (46) destinés à coopérer avec lesdites au moins deux tiges de serrage (55) pour permettre l'assemblage entre elles des plaques de serrage supérieure (45) et inférieure (46),
**caractérisé en ce qu'**au moins l'une des plaques de serrage supérieure (45) et inférieure (46) comporte un logement (90), formé dans l'épaisseur (eₚ) de ladite au moins l'une des plaques de serrage supérieure (45) et inférieure (46), comprenant des première (90a) et deuxième (90b) extrémités opposées dont l'une au moins débouche sur la face latérale (FL) de ladite au moins l'une des plaques de serrage supérieure (45) et inférieure (46), ledit logement (90) étant situé à l'intérieur de ladite au moins l'une des plaques de serrage supérieure (45) et inférieure (46), à distance de ses faces principales supérieure (FS) et inférieure (FI) sensiblement parallèles entre elles,
et **en ce que** l'ensemble (80) comporte au moins une plaque chauffante (95), démontable et interchangeable, insérée dans ledit logement (90).

2. Ensemble selon la revendication 1, **caractérisé en ce que** ledit logement (90) et ladite au moins une plaque chauffante (95) présentent une forme sensiblement parallélépipédique, notamment une forme de pavé ou une forme cubique.

3. Ensemble selon la revendication 1 ou 2, **caractérisé en ce que** ledit logement (90) est formé, dans l'épaisseur (eₚ) de ladite au moins l'une des plaques de serrage supérieure (45) et inférieure (46), de façon centrale, à égale distance des faces principales supérieure (FS) et inférieure (FI), et à égale distance des orifices de serrage (54), entre les orifices de serrage (54).

4. Ensemble selon l'une des revendications précédentes, **caractérisé en ce que** l'épaisseur (eₗ) dudit logement (90) est comprise entre 5 mm et 10 mm, notamment de l'ordre de 8 mm, et **en ce que** la largeur (l) dudit logement (90) est comprise entre 20 mm et 86 mm, notamment de l'ordre de 86 mm.

5. Ensemble selon l'une quelconque des revendications précédentes, **caractérisé en ce que** ladite au moins une plaque chauffante (95) comporte une résistance chauffante dont la puissance maximale est d'au moins 1200 W.

6. Ensemble selon l'une quelconque des revendications précédentes, **caractérisé en ce que** ladite au moins une plaque chauffante (95) est réalisée en céramique ou en alliage métallique, notamment en acier inoxydable ou en alliage à base de nickel, étant notamment traité par un revêtement d'aluminisation.

7. Ensemble selon l'une quelconque des revendications précédentes, **caractérisé en ce qu'**un jeu (J) est présent entre la surface externe de ladite au moins une plaque chauffante (95) et la surface interne dudit logement (90), dont la dimension est comprise entre 0,2 et 0,5 mm.

8. Ensemble selon l'une quelconque des revendications précédentes, **caractérisé en ce que** ladite au moins l'une des plaques de serrage supérieure (45) et inférieure (46) comporte au moins une rainure interne (100, 101) formée dans l'épaisseur (eₚ) de ladite au moins l'une des plaques de serrage supérieure (45) et inférieure (46) et s'étendant sensiblement parallèlement aux faces supérieure (FS) et inférieure (FI) de celle-ci, et dont au moins une extrémité (100a, 101a) débouche sur la face latérale (FL) de ladite au moins l'une des plaques de serrage supérieure (45) et inférieure (46), et **en ce que** l'ensemble (80) comporte au moins un dispositif de thermocouple inséré dans ladite au moins une rainure interne (100, 101).

9. Ensemble selon la revendication 8, **caractérisé en ce que** ladite au moins une rainure interne (100, 101) comporte une première rainure interne (100) de sécurité et une deuxième rainure interne (101) de régulation et **en ce que** ledit au moins un dispositif de thermocouple comporte un premier dispositif de thermocouple de sécurité inséré dans la première rainure interne (100) et un deuxième dispositif de thermocouple de régulation inséré dans la deuxième rainure interne (101).

10. Ensemble selon l'une quelconque des revendications précédentes, **caractérisé en ce qu'**il comporte une plaque terminale supérieure (43) et une plaque terminale inférieure (44), entre lesquelles la pluralité de cellules électrochimiques (41) et la pluralité d'interconnecteurs intermédiaires (42) sont enserrées.

11. Ensemble selon l'une quelconque des revendications précédentes, **caractérisé en ce que** ladite au moins l'une des plaques de serrage supérieure (45) et inférieure (46) est fabriquée par une technique de fabrication additive, étant notamment réalisée en acier austénitique réfractaire.

12. Ensemble selon l'une quelconque des revendications précédentes, **caractérisé en ce que** ladite au moins l'une des plaques de serrage supérieure (45) et inférieure (46) présente une épaisseur comprise entre 20 et 30 mm, notamment de l'ordre de 25 mm.

13. Procédé de fabrication d'un ensemble (80) selon l'une quelconque des revendications précédentes, **caractérisé en ce qu'**il comporte l'étape de réalisation dudit logement (90) dans ladite au moins l'une des plaques de serrage supérieure (45) et inférieure (46).

14. Procédé selon la revendication 13, **caractérisé en ce que** l'étape de réalisation dudit logement (90) comporte la réalisation par électroérosion par enfonçage et/ou par fabrication additive.

## Patentansprüche

1. Baugruppe (80), umfassend:
- einen Stapel (20) von Festoxidzellen des SOEC/SOFC-Typs, die bei hoher Temperatur arbeiten, umfassend:
- eine Vielzahl von elektrochemischen Zellen (41), die jeweils aus einer Kathode, einer Anode und einem zwischen Kathode und Anode eingelegten Elektrolyt gebildet sind, und eine Vielzahl von Zwischenverbindern (42), die jeweils zwischen zwei benachbarten elektrochemischen Zellen (41) angeordnet sind,
- ein Spannsystem (60) des Stapels (20) von Festoxidzellen des SOEC/SOFC-Typs, umfassend eine obere Spannplatte (45) und eine untere Spannplatte (46), zwischen denen der Stapel (20) von Festoxidzellen des SOEC/SOFC-Typs eingespannt ist, wobei jede Spannplatte (45, 46) mindestens zwei Spannöffnungen (54) umfasst, wobei das Spannsystem (60) ferner Folgendes umfasst:
- mindestens zwei Spannstangen (55), die dazu bestimmt sind, sich jeweils durch eine Spannöffnung (54) der oberen Spannplatte (45) und durch eine entsprechende Spannöffnung (54) der unteren Spannplatte (46) zu erstrecken, um die Verbindung der oberen (45) und unteren Spannplatten (46) miteinander zu ermöglichen,
- Spannmittel (56, 57, 58) an jeder Spannöffnung (54) der oberen (45) und unteren (46) Spannplatten, die dazu bestimmt sind, mit den mindestens zwei Spannstangen (55) zusammenzuarbeiten, um die Verbindung der oberen (45) und unteren (46) Spannplatten miteinander zu ermöglichen,
**dadurch gekennzeichnet, dass** mindestens eine der oberen (45) und unteren (46) Spannplatten eine Aufnahme (90) umfasst, die in der Dicke (eₚ) der mindestens eine der oberen (45) und unteren (46) Spannplatten ausgebildet ist, die erste (90a) und zweite (90b) gegenüberliegende Enden umfasst, von denen mindestens eines auf die Seitenfläche (FL) der mindestens eine der oberen (45) und unteren (46) Spannplatten mündet, wobei die Aufnahme (90) innerhalb der mindestens eine der oberen (45) und unteren (46) Spannplatten in einem Abstand zu ihren im Wesentlichen zueinander parallelen oberen (FS) und unteren Hauptflächen (FI) angeordnet ist,
und dass die Baugruppe (80) mindestens eine demontierbare und austauschbare Heizplatte (95) umfasst, die in das Gehäuse (90) eingesetzt ist.

2. Baugruppe nach Anspruch 1, **dadurch gekennzeichnet, dass** die Aufnahme (90) und die mindestens eine Heizplatte (95) eine im Wesentlichen parallelepipedische Form, insbesondere eine Pflasterform oder eine kubische Form, aufweisen.

3. Baugruppe nach Anspruch 1 oder 2, **dadurch gekennzeichnet, dass** die Aufnahme (90) in der Dicke (eₚ) der mindestens einen der oberen (45) und unteren (46) Spannplatten mittig in gleichem Abstand zu den oberen (FS) und unteren Hauptflächen (FI) und in gleichem Abstand zu den Spannöffnungen (54) zwischen den Spannöffnungen (54) gebildet ist.

4. Baugruppe nach einem der vorhergehenden Ansprüche, **dadurch gekennzeichnet, dass** die Dicke (eₗ) der Aufnahme (90) zwischen 5 mm und 10 mm liegt, insbesondere im Bereich von 8 mm, und dass die Breite (I) des Gehäuses (90) zwischen 20 mm und 86 mm, insbesondere im Bereich von 86 mm, liegt.

5. Baugruppe nach einem der vorhergehenden Ansprüche, **dadurch gekennzeichnet, dass** die mindestens eine Heizplatte (95) einen Heizwiderstand mit einer maximalen Leistung von mindestens 1200 W umfasst.

6. Baugruppe nach einem der vorhergehenden Ansprüche, **dadurch gekennzeichnet, dass** die mindestens eine Heizplatte (95) aus Keramik oder aus einer Metalllegierung, insbesondere aus Edelstahl oder aus einer Legierung auf Nickelbasis, hergestellt ist, insbesondere durch eine Aluminisierungsbeschichtung behandelt wird.

7. Baugruppe nach einem der vorhergehenden Ansprüche, **dadurch gekennzeichnet, dass** zwischen der Außenfläche der mindestens einen Heizplatte (95) und der Innenfläche des Gehäuses (90) ein Spiel (J) vorhanden ist, dessen Abmessung zwischen 0,2 und 0,5 mm liegt.

8. Baugruppe nach einem der vorhergehenden Ansprüche, **dadurch gekennzeichnet, dass** die mindestens eine der oberen (45) und unteren (46) Spannplatten mindestens eine innere Nut (100, 101) umfasst, die in der Dicke (eₚ) der mindestens eine der oberen (45) und unteren (46) Spannplatten ausgebildet ist und sich im Wesentlichen parallel zu deren Oberseite (FS) und Unterseite (FI) erstreckt, und von der mindestens ein Ende (100a, 101a) auf die Seitenfläche (FL) der mindestens einen der oberen (45) und unteren (46) Spannplatten mündet, und dass die Baugruppe (80) mindestens eine in die mindestens eine innere Nut (100, 101) eingesetzte Thermoelementvorrichtung umfasst.

9. Baugruppe nach Anspruch 8, **dadurch gekennzeichnet, dass** die mindestens eine innere Nut (100, 101) eine erste innere Sicherheitsnut (100) und eine zweite innere Regelnut (101) umfasst und, dass die mindestens eine Thermoelementvorrichtung eine erste in die erste innere Nut (100) eingesetzte Sicherheitsthermoelementvorrichtung und eine zweite in die zweite innere Nut (101) eingesetzte Thermoelementvorrichtung umfasst.

10. Baugruppe nach einem der vorhergehenden Ansprüche, **dadurch gekennzeichnet, dass** sie eine obere Endplatte (43) und eine untere Endplatte (44) umfasst, zwischen denen die Vielzahl von elektrochemischen Zellen (41) und die Vielzahl von Zwischenverbindern (42) eingeklemmt sind.

11. Baugruppe nach einem der vorhergehenden Ansprüche, **dadurch gekennzeichnet, dass** die mindestens eine der oberen (45) und unteren (46) Spannplatten im additiven Fertigungsverfahren hergestellt ist, insbesondere aus feuerfestem austenitischem Stahl.

12. Baugruppe nach einem der vorhergehenden Ansprüche, **dadurch gekennzeichnet, dass** die mindestens eine der oberen (45) und unteren (46) Spannplatten eine Dicke zwischen 20 und 30 mm, insbesondere im Bereich von 25 mm, aufweist.

13. Verfahren zur Herstellung einer Baugruppe (80) nach einem der vorhergehenden Ansprüche, **dadurch gekennzeichnet, dass** es den Herstellungsschritt der Aufnahme (90) in der mindestens einen der oberen (45) und unteren (46) Spannplatten umfasst.

14. Verfahren nach Anspruch 13, **dadurch gekennzeichnet, dass** der Herstellungsschritt der Aufnahme (90) die Herstellung durch Stanzen und/oder additive Fertigung umfasst.

## Claims

1. An assembly (80), including:
- an SOEC/SOFC type solid oxide cell stack (20) operating at high temperature, including:
- a plurality of electrochemical cells (41) each formed of a cathode, an anode and an electrolyte interposed between the cathode and the anode, and a plurality of intermediate interconnectors (42) each arranged between two adjacent electrochemical cells (41),
- a system (60) for clamping the SOEC/SOFC type solid oxide cell stack (20), including an upper clamping plate (45) and a lower clamping plate (46), between which the SOEC/SOFC type solid oxide cell stack (20) is clamped, each clamping plate (45, 46) including at least two clamping holes (54), the clamping system (60) further including:
- at least two clamping rods (55) intended to each extend through a clamping hole (54) of the upper clamping plate (45) and through a corresponding clamping hole (54) of the lower clamping plate (46) to allow the assembly of the upper (45) and lower (46) clamping plates together,
- clamping means (56, 57, 58) at each clamping hole (54) of the upper (45) and lower (46) clamping plates intended to cooperate with said at least two clamping rods (55) to allow the assembly of the upper (45) and lower (46) clamping plates together,
**characterised in that** at least one of the upper (45) and lower (46) clamping plates includes a housing (90), formed in the thickness (eₚ) of said at least one of the upper (45) and lower (46) clamping plates, comprising first (90a) and second (90b) opposite ends of which at least one opens onto the lateral face (FL) of said at least one of the upper (45) and lower (46) clamping plates, said housing (90) being located inside said at least one of the upper (45) and lower (46) clamping plates, at a distance from its upper (FS) and lower (FI) main faces, which are substantially parallel with each other,
and **in that** the assembly (80) includes at least one, removable and interchangeable, heating plate (95) inserted into said housing (90).

2. The assembly according to claim 1, **characterised in that** said housing (90) and said at least one heating plate (95) have a substantially parallelepiped shape, particularly a block shape or a cubic shape.

3. The assembly according to claim 1 or 2, **characterised in that** said housing (90) is formed, in the thickness (eₚ) of said at least one of the upper (45) and lower (46) clamping plates, centrally, at equal distance from the upper (FS) and lower (FI) main faces, and at equal distance from the clamping holes (54), between the clamping holes (54).

4. The assembly according to one of the preceding claims, **characterised in that** the thickness (eₗ) of said housing (90) is between 5 mm and 10 mm, particularly of the order of 8 mm, and **in that** the width (I) of said housing (90) is between 20 mm and 86 mm, particularly of the order of 86 mm.

5. The assembly according to any one of the preceding claims, **characterised in that** said at least one heating plate (95) includes a heating resistor, the maximum power of which is at least 1200 W.

6. The assembly according to any one of the preceding claims, **characterised in that** said at least one heating plate (95) is made of ceramic or metal alloy, particularly of stainless steel or nickel-based alloy, being particularly treated with an aluminising coating.

7. The assembly according to any one of the preceding claims, **characterised in that** a gap (J) is present between the outer surface of said at least one heating plate (95) and the inner surface of said housing (90), the dimension of which is between 0.2 and 0.5 mm.

8. The assembly according to any one of the preceding claims, **characterised in that** said at least one of the upper (45) and lower (46) clamping plates includes at least one inner groove (100, 101) formed in the thickness (eₚ) of said at least one of the upper (45) and lower (46) clamping plates and extending substantially parallel with the upper (FS) and lower (FI) faces thereof, and of which at least one end (100a, 101a) opens onto the lateral face (FL) of said at least one of the upper (45) and lower (46) clamping plates, and **in that** the assembly (80) includes at least one thermocouple device inserted into said at least one inner groove (100, 101).

9. The assembly according to claim 8, **characterised in that** said at least one inner groove (100, 101) includes a first inner safety groove (100) and a second inner control groove (101) and **in that** said at least one thermocouple device includes a first safety thermocouple device inserted into the first inner groove (100) and a second control thermocouple device inserted into the second inner groove (101).

10. The assembly according to any one of the preceding claims, **characterised in that** it includes an upper end plate (43) and a lower end plate (44), between which the plurality of electrochemical cells (41) and the plurality of intermediate interconnectors (42) are clamped.

11. The assembly according to any one of the preceding claims, **characterised in that** said at least one of the upper (45) and lower (46) clamping plates is manufactured by an additive manufacturing technique, being particularly made of refractory austenitic steel.

12. The assembly according to any one of the preceding claims, **characterised in that** said at least one of the upper (45) and lower (46) clamping plates has a thickness between 20 and 30 mm, in particular of the order of 25 mm.

13. A method for manufacturing an assembly (80) according to any one of the preceding claims, **characterised in that** it includes the step of producing said housing (90) in said at least one of the upper (45) and lower (46) clamping plates.

14. The method according to claim 13, **characterised in that** the step of producing said housing (90) comprises producing by electroerosion by die sinking and/or by additive manufacturing.
